# DEMANDE DE BREVET EUROPEEN

(11) **EP 4 497 496 A1**
(43) Date de publication de la demande: **29.01.2025**
(21) Numéro de dépôt: 24190334.3
(22) Date de dépôt: 23.07.2024
(51) Int. Cl.: B01F 35/88, B05B 9/04, B05C 11/10, F04B 15/02, F04B 13/00, B05B 12/14, B05B 15/55, B05B 7/26, G05D 11/13

(54) **PROCÉDÉ DE RINÇAGE D'UN DISPOSITIF D'APPLICATION DE PRODUIT DE REVÊTEMENT, ET DISPOSITIF ASSOCIÉ**

(30) Priorité: 24.07.2023 FR 2307938
(71) Demandeur: Exel Industries, 51200 Epernay (FR)
(72) Inventeur: COGNON, Thibault, 92110 CLICHY (FR)
(74) Mandataire: Lavoix

(57) **Abrégé**

La présente invention concerne un procédé de rinçage d'un dispositif d'application (12) de produit de revêtement comprenant un dispositif de dosage (10) et un applicateur (13) de produit de revêtement. Le dispositif de dosage (10) comprend une pompe doseuse (14) présentant une entrée (26) reliée à une voie d'alimentation en gaz (20) et une voie d'alimentation en solvant (22) et une sortie (28) reliée à l'applicateur (13). Chacune des voies d'alimentation est pourvue d'une vanne respective (40, 42).

Le procédé comprend au moins une étape d'aspiration par la pompe doseuse (14) d'un volume lors d'au moins une phase d'aspiration de la pompe doseuse (14), les vannes (40, 42) étant alternativement dans la configuration ouverte pendant l'au moins une phase d'aspiration, de sorte que le volume aspiré lors de l'au moins une phase d'aspiration comprend alternativement du gaz et du solvant.

L'invention concerne en outre un dispositif d'application associé.

## Description

La présente invention concerne un procédé de rinçage d'un dispositif d'application de produit de revêtement comprenant un dispositif de dosage, et un dispositif associé.

Pour rincer un dispositif d'application de produit de revêtement, il est, par exemple, injecté du solvant dans le dispositif d'application.

Toutefois, une telle méthode utilise beaucoup de solvant.

Le but de l'invention est alors de proposer un procédé de rinçage de dispositif d'application de produit de revêtement plus écologique.

A cet effet, l'invention a pour objet un procédé de rinçage d'un dispositif d'application de produit de revêtement comprenant un dispositif de dosage et un applicateur de produit de revêtement, le dispositif de dosage comprenant une pompe doseuse présentant une entrée et une sortie, l'entrée étant reliée à une voie d'alimentation en gaz et une voie d'alimentation en solvant, la sortie étant reliée à l'applicateur de produit de revêtement, la voie d'alimentation en gaz étant pourvue d'une vanne de gaz, la voie d'alimentation en solvant étant pourvue d'une vanne de solvant, chacune des vannes de gaz et de solvant présentant au moins une configuration fermée, dans laquelle la vanne empêche le passage respectivement de gaz ou de solvant vers l'entrée, et au moins une configuration ouverte, dans laquelle la vanne permet le passage respectivement de gaz ou de solvant vers l'entrée, le procédé comprenant au moins une étape d'aspiration par la pompe doseuse d'un volume lors d'au moins une phase d'aspiration de la pompe doseuse, la vanne de gaz et la vanne de solvant étant alternativement dans la configuration ouverte pendant l'au moins une phase d'aspiration, de sorte que le volume aspiré lors de l'au moins une phase d'aspiration comprend alternativement du gaz et du solvant.

Ainsi, du gaz est injecté dans le solvant. Cela crée une émulsion qui est utilisée pour rincer le dispositif d'application. Cela permet de diminuer la quantité de solvant utilisé pour le rinçage.

Suivant d'autres aspects avantageux de l'invention, le procédé de rinçage comprend une ou plusieurs des caractéristiques suivantes, prises isolément ou suivant toutes les combinaisons techniquement possibles :
- l'au moins une phase d'aspiration comprend, dans cet ordre, les étapes suivantes : ouverture d'une première vanne parmi la vanne de gaz et la vanne de solvant, aspiration de gaz ou de solvant par la pompe doseuse pour un premier volume, fermeture de la première vanne, ouverture d'une deuxième vanne parmi la vanne de gaz et la vanne de solvant, la deuxième vanne étant différente de la première vanne, aspiration de gaz ou de solvant par la pompe doseuse pour un deuxième volume , et fermeture de la deuxième vanne, lesdites étapes précédentes étant répétées pendant toute l'au moins une phase d'aspiration ;
- l'aspiration comprend un cycle d'aspiration comprenant une aspiration de gaz et une aspiration de solvant par la pompe doseuse, ledit cycle d'aspiration étant réitéré pendant toute la phase d'aspiration ;
- le procédé de dosage comprend une détection du volume aspiré pendant l'aspiration par la pompe doseuse, plus particulièrement par un capteur de volume aspiré ou un capteur de déplacement de la pompe doseuse ;
- le dispositif de dosage comprend en outre au moins deux voies d'alimentation en produit composant respectif ;
- la pompe doseuse est une pompe à piston ;
- la voie d'alimentation en gaz est pourvue d'un compresseur, le compresseur étant adapté pour comprimer le gaz vers l'entrée de la pompe doseuse en amont de la vanne de gaz, la voie d'alimentation en solvant étant pourvue d'une pompe secondaire en solvant, la pompe secondaire en solvant étant adaptée pour pomper le solvant vers l'entrée de la pompe doseuse, la pompe secondaire en solvant étant agencée en amont de la vanne de solvant ; et/ou
- le dispositif de dosage comprend un mélangeur en aval de la sortie de la pompe doseuse, plus particulièrement agencé adjacent à la sortie de la pompe doseuse.

L'invention concerne également un dispositif d'application de produit de revêtement comprenant un dispositif de dosage et un applicateur de produit de revêtement, le dispositif de dosage comprenant une pompe doseuse, une voie d'alimentation en gaz et une voie d'alimentation en solvant, et un module de commande, la pompe doseuse présentant une entrée et une sortie, l'entrée étant reliée à la voie d'alimentation en gaz et la voie d'alimentation en solvant, la sortie étant reliée à l'applicateur de produit de revêtement, la voie d'alimentation en gaz étant pourvue d'une vanne de gaz, la voie d'alimentation en solvant étant pourvue d'une vanne de solvant, chacune des vannes de gaz et de solvant présentant au moins une configuration fermée, dans laquelle la vanne empêche le passage respectivement de gaz ou de solvant vers l'entrée, et au moins une configuration ouverte, dans laquelle la vanne permet le passage respectivement de gaz ou de solvant vers l'entrée, le module de commande étant apte à contrôler la vanne de gaz et la vanne de solvant, le module de commande étant configuré pour mettre en oeuvre une aspiration selon l'au moins une étape d'aspiration du procédé décrit précédemment.

L'invention apparaîtra plus clairement à la lecture de la description qui va suivre, donnée uniquement à titre d'exemple non limitatif, et faite en référence aux dessins dans lesquels :
[Fig. 1] la figure 1 est une vue schématique d'un exemple de dispositif d'application en cours de rinçage selon un premier mode de réalisation de l'invention,
[Fig. 2] la figure 2 est une vue schématique d'un exemple de dispositif d'application en cours de rinçage selon un deuxième mode de réalisation de l'invention, et
[Fig 3] la figure 3 est un exemple de pompe doseuse pour un dispositif d'application selon l'invention.

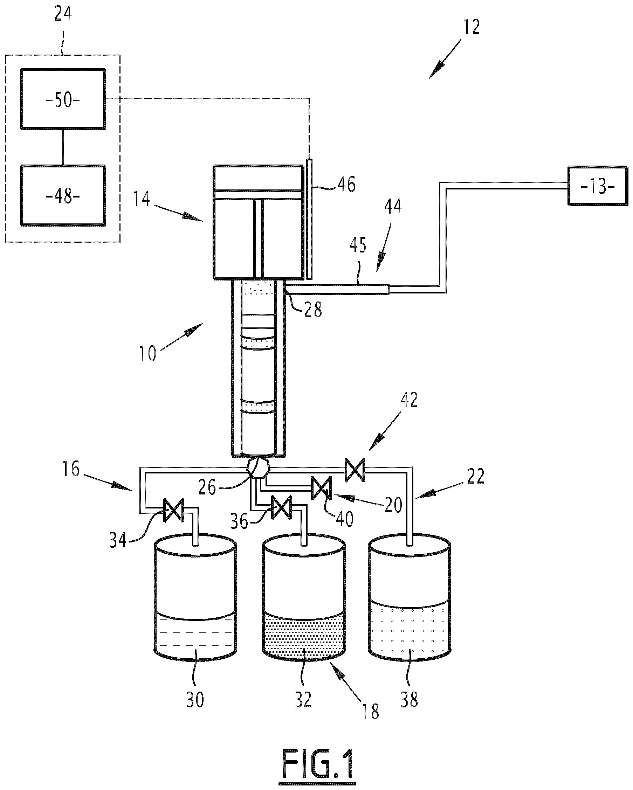

Un premier exemple de dispositif d'application 12 de produit de revêtement va maintenant être décrit en regard de la figure 1.

Le produit de revêtement est, par exemple, un produit multi-composant.

Le produit de revêtement est, par exemple, une peinture.

Le produit de revêtement présente, par exemple, une viscosité comprise entre 100 Cps et 10 000Cps.

Le dispositif d'application 12 de produit de revêtement comprend un dispositif de dosage 10.

Le dispositif d'application 12 comprend en outre un applicateur 13 de produit de revêtement.

L'applicateur 13 est, par exemple, un ou plusieurs pistolets de pulvérisation, ou un ou plusieurs bols rotatifs de pulvérisation, ou une ou plusieurs vannes de dépose.

Le dispositif de dosage 10 comprend une pompe doseuse 14.

Le dispositif de dosage 10 comprend ici une voie d'alimentation en gaz 20 et une voie d'alimentation en solvant 22.

Le dispositif de dosage 10 comprend ici en outre une pluralité de voies d'alimentation 16, 18 en produit composant respectif.

Le dispositif de dosage 10 comprend en outre ici un dispositif électronique 24.

La pompe doseuse 14 présente une entrée 26 et une sortie 28.

La pompe doseuse est apte à pomper un volume donné de fluide, liquide ou gazeux.

La pompe doseuse présente, par exemple, une cylindrée comprise entre 10cc et 500cc.

La pompe doseuse présente au moins une phase d'aspiration.

Dans un mode de réalisation, la pompe doseuse présente une phase d'aspiration et une phase sans aspiration.

Pendant la phase d'aspiration, un volume correspondant à la cylindrée de la pompe doseuse entre dans la pompe doseuse au niveau de l'entrée. Additionnellement, pendant la phase d'aspiration, un volume correspondant à une première portion, ici la moitié, de la cylindrée de la pompe sort de la pompe au niveau de la sortie.

Pendant la phase sans aspiration, aucun fluide n'entre dans la pompe doseuse au niveau de l'entrée. Un volume correspondant à une deuxième portion, complémentaire de la première portion, ici la moitié, de la cylindrée de la pompe sort de la pompe au niveau de la sortie.

Dans l'exemple représenté, la pompe doseuse 14 est une pompe à piston.

La pompe à piston présente un fonctionnement avec une phase d'aspiration et une phase sans aspiration telles que décrites précédemment.

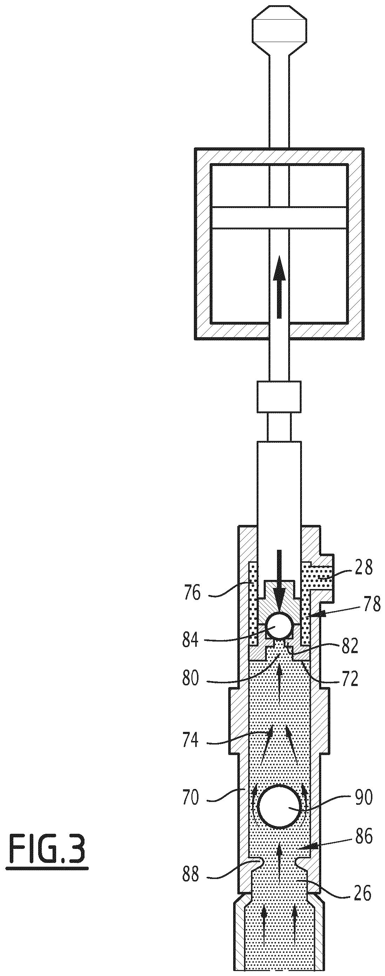

Un exemple de pompe à piston utilisée comme pompe doseuse 14 est, par exemple, représentée sur la figure 3 pendant la phase d'aspiration.

La pompe doseuse comprend, par exemple, un cylindre 70 et une tête 72 de piston, la tête de piston 72 délimitant deux chambres de volume variable dans le cylindre, dite chambre amont 74 et chambre aval 76.

L'entrée 26 est agencée à l'opposé de la sortie 28.

L'entrée 26 débouche dans la chambre amont 74 à l'opposé de la chambre aval 76, la sortie 28 débouche dans la chambre aval 76 à l'opposé de la chambre amont 74.

La tête 72 de piston est, ici, pourvue d'un clapet de refoulement 78.

La tête de piston délimite une ouverture 80 pour le passage de fluide de la chambre amont 74 à la chambre aval 76, le clapet de refoulement 78 empêchant le passage de fluide de la chambre aval 76 à la chambre amont 74.

Le clapet de refoulement 78 comprend, par exemple, un siège 82 délimité par la tête et entourant l'ouverture et une bille 84 apte à reposer sur le siège 82.

La pompe à piston est en outre pourvu d'un clapet d'aspiration 86 agencé au niveau de l'entrée 26 de la pompe doseuse.

Le clapet d'aspiration empêche la sortie de fluide de la pompe doseuse au niveau de l'entrée 26.

Le clapet d'aspiration comprend, par exemple, un siège 88 entourant l'entrée 26 et une bille 90 apte à reposer sur le siège.

Lors de la phase d'aspiration de la pompe doseuse, la tête de piston 72 se déplace vers la sortie 28. Le volume contenu dans la chambre aval 76 est expulsé par la sortie 28. En outre, une dépression se crée dans la chambre amont 74, et un fluide est aspiré à l'entrée 26, plus particulièrement correspondant à la cylindrée de la pompe.

Plus particulièrement, la bille 90 du clapet d'aspiration 86 s'éloigne du siège 88 à cause de la dépression générée dans la chambre amont 74, et la bille 84 du clapet de refoulement 78 reposant sur le siège 82 à cause de la surpression dans la chambre aval.

Lors de la phase sans aspiration de la pompe doseuse, la tête de piston se déplace vers l'entrée 26. Aucun fluide n'entre par l'entrée 26. Le volume contenu dans la chambre aval 76 est expulsé par la sortie 28. Une portion du volume, ici la moitié du volume, contenu dans la chambre amont 74 se déplace dans la chambre aval 76.

Plus particulièrement, la bille 90 du clapet d'aspiration 86 repose sur son siège 88 à cause de la surpression générée dans la chambre amont 74, et la bille 84 du clapet de refoulement 78 s'éloigne de son siège 82 et libère l'ouverture 80 à cause de la dépression dans la chambre aval 76.

Alternativement, pendant la phase d'aspiration, un volume correspondant à la cylindrée de la pompe doseuse entre dans la pompe doseuse au niveau de l'entrée, et aucun fluide ne sort de la pompe au niveau de la sortie, et pendant la phase sans aspiration, un volume correspondant à la cylindrée de la pompe doseuse sort de la pompe au niveau de la sortie, et aucun fluide n'entre dans la pompe doseuse au niveau de l'entrée.

Alternativement, la pompe doseuse comprend un piston comprenant une tête ne présentant pas d'ouverture et définissant deux chambres ne communiquant pas, dont une chambre de pompage. L'entrée et la sortie de la pompe doseuse sont agencées dans la même chambre de pompage. L'entrée et la sortie débouchent plus particulièrement dans la chambre de pompage à l'opposé de l'autre chambre délimitée par la tête. L'entrée et la sortie sont, par exemple, chacune équipée d'une vanne anti-retour. La pompe doseuse présente alors une phase d'aspiration, dans laquelle la pompe aspire un volume de fluide, par exemple équivalent à la cylindrée de la pompe, et n'expulse pas de fluide et une phase sans aspiration, dans laquelle la pompe expulse ledit volume de fluide.

Alternativement à la pompe à piston, la pompe doseuse est une pompe à membranes ou une pompe à billes.

La sortie 28 est adaptée pour être reliée à l'applicateur 13 de produit de revêtement, de sorte que la pompe doseuse 14 alimente l'applicateur de produit de revêtement.

L'entrée est reliée à la voie d'alimentation en gaz 20 et/ou la voie d'alimentation en solvant 22, et en outre à la pluralité de voies d'alimentation en produit composant respectif 16, 18 le cas échéant.

Dans l'exemple représenté, un connecteur est agencé à l'entrée 26.

Le connecteur est, par exemple, un bloc de distribution.

Le connecteur est relié à chacune des voies d'alimentation.

Chaque voie d'alimentation en produit composant 16, 18 est apte à alimenter l'entrée de la pompe doseuse 14 du produit composant correspondant, par exemple à partir d'un réservoir respectif 30, 32 propre à ladite voie d'alimentation contenant du produit composant correspondant.

Les voies d'alimentation en produit composant 16, 18 se rencontrent, par exemple, en amont de l'entrée au niveau d'un point de connexion, le point de connexion étant relié à l'entrée.

Le point de connexion est, par exemple, adjacent à l'entrée 26.

Alternativement, chaque voie d'alimentation en produit composant 16, 18 est reliée à l'entrée 26 séparément les unes des autres.

Chaque voie d'alimentation en produit composant 16, 18 est pourvue d'une vanne respective 34, 36.

La vanne respective 34, 36 est agencée en amont de l'entrée 26, plus particulièrement en amont du point de connexion le cas échéant.

La vanne respective 34, 36 est ici agencée en aval du réservoir respectif 30, 32.

Chaque vanne 34, 36 présente au moins une configuration fermée, dans laquelle la vanne empêche le passage du produit composant correspondant à travers ladite vanne, c'est-à-dire ici vers l'entrée 26, et au moins une configuration ouverte, dans laquelle la vanne permet le passage du produit composant correspondant à traves ladite vanne, c'est-à-dire ici vers l'entrée 26.

Chaque vanne 34, 36 présente ici une configuration fermée et une pluralité de configurations ouvertes. Les débits d'écoulement du produit composant correspondant à travers ladite vanne diffèrent selon les configurations ouvertes.

Alternativement, chaque vanne 34, 36 présente ici uniquement une configuration fermée et une configuration ouverte.

Le débit d'écoulement du produit composant correspondant dans la voie d'alimentation est alors, par exemple, réglable en un autre emplacement sur la voie d'alimentation, par exemple avec une vanne de réglage de débit, par exemple au niveau de l'applicateur 13 ou sur la ligne de sortie 44.

La voie d'alimentation en gaz 20 est apte à alimenter l'entrée 26 en gaz, plus particulièrement en air, par exemple en air comprimé.

La voie d'alimentation en solvant 22 est apte à alimenter l'entrée 26 en solvant, par exemple à partir d'un réservoir de solvant 38 contenant du solvant.

Dans un mode de réalisation, la voie d'alimentation en solvant est également considéré comme une voie d'alimentation en produit composant, telle que décrite précédemment, le produit multi-composant comprenant du solvant.

La voie d'alimentation en gaz 20 et la voie d'alimentation en solvant 22 se rencontrent, par exemple, en amont de l'entrée au niveau d'un point de connexion, le point de connexion étant relié à l'entrée. Le point de connexion est, par exemple, le même que le point de connexion des voies d'alimentation en produit composant 16, 18, l'ensemble des voies d'alimentation se rencontrant audit point de connexion.

Alternativement, chaque voie d'alimentation 16, 18, 20, 22 est reliée à l'entrée 26 séparément les unes des autres.

La voie d'alimentation en gaz 20 est pourvue d'une vanne de gaz 40.

Plus particulièrement, dans l'exemple représenté, la vanne de gaz 40 est agencée à l'extrémité amont de la voie d'alimentation en gaz 20.

La vanne de gaz 40 est, par exemple, apte à prélever du gaz, plus particulièrement de l'air, dans l'atmosphère entourant le dispositif de dosage 10.

La vanne de gaz 40 est agencée en amont de l'entrée 26, plus particulièrement en amont du point de connexion le cas échéant.

La vanne de gaz 40 présente au moins une configuration fermée, dans laquelle la vanne empêche le passage de gaz à travers la vanne 40 vers l'entrée 26, et au moins une configuration ouverte, dans laquelle la vanne permet le passage de gaz à travers la vanne 40 vers l'entrée 26.

Tel que décrit précédemment en regard des vannes 34, 36, la vanne de gaz 40 présente, par exemple, une configuration fermée et une pluralité de configurations ouvertes, ou alternativement uniquement une configuration fermée et une configuration ouverte.

La voie d'alimentation en solvant 22 est pourvue d'une vanne de solvant 42.

La vanne de solvant 42 est agencée en amont de l'entrée 26, plus particulièrement en amont du point de connexion le cas échéant.

La vanne de solvant 42 est ici agencée en aval du réservoir de solvant 38.

La vanne de solvant 42 présente au moins une configuration fermée, dans laquelle la vanne empêche le passage de solvant à travers la vanne 42 vers l'entrée, et au moins une configuration ouverte, dans laquelle la vanne permet le passage de solvant à travers la vanne 42 vers l'entrée 26.

Tel que décrit précédemment en regard des vannes 34, 36, la vanne de solvant 42 présente, par exemple, une configuration fermée et une pluralité de configurations ouvertes, ou alternativement uniquement une configuration fermée et une configuration ouverte.

Le dispositif d'application 12 comprend en outre une ligne de sortie 44.

La ligne de sortie 44 s'étend ici entre une extrémité amont et une extrémité aval.

La ligne de sortie 44, plus particulièrement l'extrémité amont, est reliée à la sortie 28 de la pompe doseuse 14.

L'extrémité aval est reliée à l'applicateur 13.

Plus particulièrement, la pompe doseuse 14 expulse le produit contenu dans la pompe doseuse dans la ligne de sortie 44.

Le dispositif de dosage 10 comprend, en outre, un mélangeur 45, ici un mélangeur mécanique, plus particulièrement un mélangeur statique, en aval de la sortie 28 de la pompe doseuse, plus particulièrement agencé adjacent à la sortie 28 de la pompe doseuse.

Le mélangeur 45 est ici agencé dans la ligne de sortie 44, plus particulièrement à l'extrémité amont de la ligne de sortie 44.

Le dispositif de dosage 10 est, en outre, ici pourvu d'un capteur 46 de volume entrant dans la pompe doseuse 14 ou un capteur de déplacement de la pompe doseuse 14.

Dans l'exemple représenté, la capteur 46 est apte à et agencé pour mesurer le déplacement du piston de la pompe doseuse 14.

Alternativement, le capteur 46 est apte à détecter un paramètre relatif à la pompe doseuse, ledit paramètre dépendant directement du volume entrant dans la pompe doseuse 14.

Par exemple, dans le cas d'une pompe présentant un engrenage à crans, le capteur est, par exemple, apte à détecter le cran de l'engrenage enclenché.

Additionnellement ou alternativement, le capteur 46 est agencé au niveau de l'entrée 26 et mesure le volume de fluide entrant dans la pompe doseuse 14 par l'entrée 26.

Le capteur 46 fournit, par exemple, un signal analogique, par exemple le volume entrant ou le déplacement du piston.

Alternativement, le capteur 46 fournit un signal numérique, par exemple, un cran d'un engrenage ou correspondant à un seuil de déplacement du piston ou de volume entrant.

Le dispositif électronique 24 comprend une unité de traitement d'informations formée par exemple d'une mémoire et d'un processeur associé à la mémoire.

Le dispositif électronique 24 comprend un module de commande 48.

Le module de commande 48 est apte à contrôler les vannes respectives 34, 36 des voies d'alimentation, plus particulièrement tel que décrit par la suite.

Le module de commande 48 est, par exemple, relié aux vannes 34, 36, par exemple de manière filaire ou par une connexion à distance.

Le module de commande 48 est en outre apte à contrôler la vanne de gaz 40 et la vanne de solvant 42, le cas échéant.

Le module de commande 48 est, par exemple, relié aux vannes 40, 42, par exemple de manière filaire ou par une connexion à distance.

Le temps de réponse pour chacune des vannes 34, 36, 40, 42 à partir de la commande du module de commande 48 est comprise entre 100 et 250 millisecondes.

Le module de commande 48 est configuré pour mettre en oeuvre l'aspiration telle que décrite dans le procédé de dosage décrit par la suite.

Le dispositif de contrôle 24 comprend en outre un module de suivi 50.

Le module de suivi 50 est relié au module de commande 48.

Le module de suivi 50 est en outre connecté au capteur 46, par exemple de manière filaire ou par une connexion à distance.

Plus particulièrement, le module de suivi 50 est adapté pour recevoir des informations du capteur 46, plus particulièrement le signal fourni par le capteur 46 comprenant les mesures réalisées par le capteur 46.

Le module de suivi 50 est apte à déterminer la quantité de volume entrant dans la pompe doseuse 14 et la nature du fluide entrant dans la pompe 14, en fonction de la configuration de chacune des vannes.

Le module de suivi 50 est alors apte à déterminer la quantité de chaque fluide entrant successivement dans la pompe doseuse 14.

Le module de commande 48, et le cas échéant, le module de suivi 50 sont réalisés chacun sous forme d'un logiciel, ou d'une brique logicielle, exécutable par le processeur. La mémoire du dispositif électronique est alors apte à stocker un logiciel de commande et un logiciel de suivi. Le processeur est alors apte à exécuter chacun des logiciels parmi le logiciel de commande et le logiciel de suivi.

En variante non représentée, le module de commande 48, et le cas échéant, le module de suivi 50 sont réalisés chacun sous forme d'un composant logique programmable, tel qu'un FPGA (de l'anglais Field Programmable Gate Array), ou encore d'un circuit intégré, tel qu'un ASIC (de l'anglais Application Spécifie Integrated Circuit).

Lorsque le dispositif électronique est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

Dans l'exemple de la figure 1, le fluide est aspiré par la pompe doseuse 14, lors de la phase d'aspiration, par une aspiration dite passive, c'est-à-dire que, pendant la phase d'aspiration, la pompe doseuse 14 créée une dépression à son entrée 26, ce qui attire un fluide, plus particulièrement le ou les fluides provenant d'une voie dont la vanne correspondante est en configuration ouverte.

Un tel dispositif est particulièrement simple.

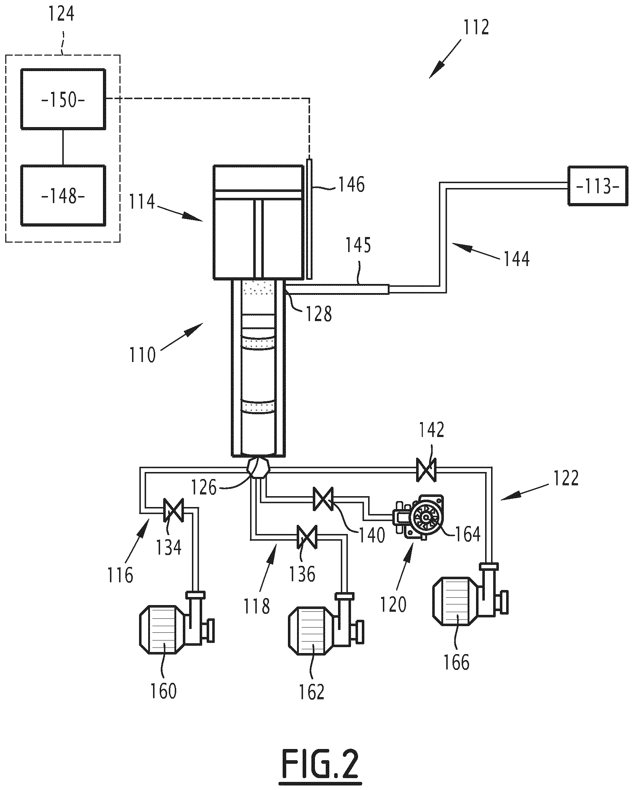

Un deuxième exemple d'application 112 d'un produit de revêtement pour application selon un deuxième mode de réalisation de l'invention va maintenant être décrit en regard de la figure 2.

Seules les caractéristiques par lesquelles ce deuxième mode de réalisation diffère du premier mode de réalisation vont être décrites ici. A l'exception de ces caractéristiques, le dispositif d'application 112 est identique par ailleurs au premier exemple de dispositif d'application.

Les éléments identiques ou similaires présentent la même référence numérique incrémentée de 100.

Dans le deuxième mode de réalisation, la voie d'alimentation en gaz 120 est pourvue d'un compresseur 164, le compresseur 164 étant adapté pour comprimer le gaz vers l'entrée 126 de la pompe doseuse 114.

Le compresseur 164 est agencé en amont de la vanne de gaz 140.

Le compresseur 164 est, plus particulièrement, apte à prélever du gaz, plus particulièrement de l'air, dans l'atmosphère l'entourant, et à comprimer ledit gaz dans la voie d'alimentation en gaz 120 en amont de la vanne de gaz. 140.

La voie d'alimentation en solvant 122 est pourvue d'une pompe secondaire en solvant 166, la pompe secondaire en solvant 166 étant adaptée pour pomper le solvant vers l'entrée 126 de la pompe doseuse 114.

La pompe secondaire en solvant 166 est agencée en amont de la vanne de solvant 142.

La pompe secondaire en solvant 166 est, par exemple, agencée en aval d'un réservoir en solvant (non représenté).

En outre, chaque voie d'alimentation 116, 118 en produit composant comprend une pompe secondaire 160, 162 respective, la pompe secondaire respective 160, 162 étant adaptée pour pomper le produit composant respectif vers l'entrée 126 de la pompe doseuse 114.

Chaque pompe secondaire respective 160, 162 est agencée en amont de la vanne respective 134, 136 de la voie d'alimentation 116, 118.

Chaque pompe secondaire respective 160, 162 est, par exemple, agencée en aval d'un réservoir respectif (non représenté).

Dans l'exemple de la figure 2, le fluide est aspiré, lors de la phase d'aspiration, par la pompe doseuse 114 par une aspiration dite active, c'est-à-dire que le fluide est poussé vers l'entrée 126 par la pompe secondaire correspondante ou le compresseur. Pendant la phase d'aspiration, la pompe doseuse 114 aspire alors le fluide poussé, plus particulièrement le ou les fluides provenant d'une voie dont la vanne correspondante est en configuration ouverte.

Un tel dispositif d'application 12 ; 112 est apte à revêtir un produit de revêtement dosé par le dispositif de dosage 10 ; 110, plus particulièrement par expulsion du produit de revêtement au niveau de l'applicateur 13 ; 113.

Plus particulièrement, le dispositif de dosage 12 ; 112 est apte à doser les différents produits composants pour former un produit mono ou multi-composant, de préférence multi-composant, en particulier ici en déplaçant sélectivement les vannes 34, 36 ; 134, 136 en configuration ouverte pendant la phase d'aspiration de la pompe doseuse 14 ; 114 selon le produit composant à prélever pour former le produit multi-composant.

Le dosage est, par exemple, mis en oeuvre et contrôlé par le dispositif électronique 24 ; 124.

Le produit multi-composant est, par exemple, pré-mélangé par le déplacement de la tête de piston, dans l'exemple de pompe décrite en regard de la figure 3.

Le produit multi-composant est, par exemple, mélangé par le mélangeur 45 ; 145 sur la ligne de sortie 44 ; 144.

Puis, le produit mono ou multi-composant, de préférence multi-composant, formant le produit de revêtement, est expulsé par l'applicateur 13 ; 113, plus particulièrement vers une surface à revêtir.

Suite à l'étape d'application, du produit multi-composant est donc présent dans le dispositif d'application 12 ; 112. Le dispositif d'application 12 ; 112 est alors, par exemple, rincé.

Un procédé de rinçage d'un dispositif d'application de produit de revêtement tel que décrit précédemment va maintenant être décrit.

Le procédé de rinçage comprend une étape d'aspiration par la pompe doseuse d'un volume lors d'une phase d'aspiration de la pompe doseuse, la vanne de gaz et la vanne de solvant étant alternativement, l'une après l'autre, dans la configuration ouverte pendant l'aspiration, de sorte que le volume aspiré lors de ladite phase d'aspiration comprend alternativement du gaz et du solvant.

Plus particulièrement, le procédé de rinçage comprend une telle étape d'aspiration pendant chacune des phases d'aspiration de la pompe doseuse 14, 114, pendant toute la durée du rinçage.

Le module de commande 48, 148 met en oeuvre l'étape d'aspiration par contrôle successif des vannes, plus particulièrement de la vanne de gaz et de la vanne de solvant.

Le volume minimal aspiré de solvant lors d'une ouverture de vanne est, par exemple, supérieur ou égal à 0,5 centimètre cube, plus particulièrement supérieur ou égal à 1 centimètre cube, plus particulièrement compris entre 1 et 100 centimètres cube.

Le volume maximal aspiré de solvant lors d'une ouverture de vanne est, par exemple, inférieur ou égal à 1000 centimètre cube, plus particulièrement compris entre 300 et 1000 centimètre cube.

La vanne de gaz 40 ; 140 est, par exemple, déplacée en configuration ouverte pour une durée comprise entre 1 cycle et 100 cycles de pompe, plus particulièrement entre 4 et 10 cycles.

A tout instant, au plus une vanne des voies d'alimentation ou de gaz ou de solvant est ouverte à la fois.

Plus particulièrement, l'aspiration comprend, dans cet ordre, les étapes suivantes :
- ouverture d'une première vanne parmi la vanne de gaz et la vanne de solvant,
- aspiration d'un premier volume de gaz ou de solvant par la pompe doseuse,
- fermeture de la première vanne,
- ouverture d'une deuxième vanne parmi la vanne de gaz et la vanne de solvant, la deuxième vanne étant différente de la première vanne,
- aspiration d'un deuxième volume de gaz ou de solvant, et
- fermeture de la deuxième vanne,
lesdites étapes précédentes étant répétées pendant toute la phase d'aspiration de la pompe doseuse 14 ; 114.

Le premier volume reste le même pendant toute la phase d'aspiration, plus particulièrement pendant toutes les phases d'aspiration du rinçage.

Le deuxième volume reste le même pendant toute la phase d'aspiration, plus particulièrement pendant toutes les phases d'aspiration du rinçage.

L'aspiration présente, plus particulièrement ici, un cycle d'aspiration comprenant une aspiration de gaz et une aspiration de solvant par la pompe doseuse, ledit cycle d'aspiration étant réitéré pendant toute la phase d'aspiration, plus particulièrement pendant toutes les phases d'aspiration du rinçage.

Si à la fin d'une phase d'aspiration, un cycle d'aspiration est en cours, ledit cycle d'aspiration reprend là où il s'est interrompu lors de la phase d'aspiration suivante.

A titre d'exemple, pour un volume d'aspiration de la pompe de 100cc, si le volume de solvant à aspirer est de 32cc et d'air de 55cc, alors, lors de la première phase d'aspiration, il est, par exemple, aspiré successivement : 32 cc de solvant, 55 cc d'air, puis uniquement 13 cc de solvant. Ainsi, la deuxième phase d'aspiration commence par l'aspiration de 19 cc de solvant, puis 55 cc d'air, puis 26 cc de solvant, et ainsi de suite pour les phase d'aspiration suivantes.

Ici, le volume aspiré par la pompe doseuse 14, 114 pendant chacune de ses phases d'aspiration comprend une alternance de solvant et de gaz, qui se répète le long du volume aspiré.

Alternativement, le volume de solvant et/ou d'air à aspirer est supérieur ou égal au volume d'aspiration de la pompe. Le cas échéant, le volume aspiré par la pompe doseuse 14, 114 pendant une phase d'aspiration est susceptible de ne comprendre que du solvant ou que du gaz. Cependant, le volume aspiré par la pompe doseuse 14, 114 pendant l'ensemble de ses phases d'aspiration comprend une alternance de solvant et de gaz, qui se répète le long du volume aspiré.

Par exemple, avec un volume d'aspiration de la pompe de 25 cc, si le volume de solvant à aspirer est de 78 cc et d'air de 105cc, alors plusieurs phases d'aspiration se succèdent pour pomper le bon volume d'air d'une part et de solvant d'autre part.

Le procédé de rinçage comprend avantageusement une détection du volume aspiré pendant l'aspiration par la pompe doseuse, plus particulièrement par le capteur 46 ; 146.

Dans le premier mode de réalisation, la détection du volume de gaz, ici d'air, aspiré, est directement mise en oeuvre au niveau de la pompe doseuse.

Dans le deuxième mode de réalisation, la détection du volume de gaz, ici d'air, comprimé entrante dans la pompe doseuse est, par exemple, réalisée au niveau du compresseur 164 par activation du compresseur 164 pour une durée donnée. Additionnellement ou alternativement, la détection du volume de gaz, ici d'air, comprimé entrante dans la pompe doseuse est directement mise en oeuvre au niveau de la pompe doseuse.

Pendant l'aspiration, lorsque du solvant est aspiré par la pompe doseuse 14, 114, lorsque la quantité du solvant aspiré surveillée par le module de suivi 50, 150 atteint la quantité souhaitée, alors le module de commande 48, 148 envoie une instruction à la vanne de solvant de passer en configuration fermée, puis envoie une instruction à la vanne de gaz de passer en configuration ouverte.

Puis, par exemple, lorsque la quantité de gaz aspiré surveillée par le module de suivi 50, 150 atteint la quantité souhaitée, en particulier dans le premier mode de réalisation, alors le module de commande 48, 148 envoie une instruction à la vanne de gaz de passer en configuration fermée, puis envoie une instruction à la vanne de solvant de passer en configuration ouverte, et ainsi de suite.

Alternativement, dans le deuxième mode de réalisation, lorsque la vanne de gaz 140 et le compresseur 164 sont restés respectivement ouverte et activé pendant une durée donnée, alors le module de commande 48, 148 envoie une instruction à la vanne de gaz de passer en configuration fermée, puis envoie une instruction à la vanne de solvant de passer en configuration ouverte, et ainsi de suite.

Dans l'exemple décrit, pendant l'aspiration, la pompe doseuse 14, 114 expulse en outre une portion, ici la moitié de la cylindrée de la pompe doseuse, de fluide au niveau de la sortie 28.

Ledit fluide comprend du solvant et du gaz, ici de l'air, par exemple comprimé.

Le fluide est, par exemple, pré-mélangé par le déplacement de la tête de piston, dans l'exemple de pompe décrit en regard de la figure 3.

Le fluide est, par exemple, mélangé par le mélangeur 45 ; 145 sur la ligne de sortie 44 ; 144.

Une émulsion est créée.

L'émulsion s'écoule le long de la ligne de sortie 44 ; 144 jusqu'à l'applicateur 13 ; 113.

L'applicateur 13 ; 113 est ainsi également rincé par l'émulsion.

Lorsque la pompe doseuse comprend une phase d'aspiration et une phase sans aspiration, lors de la phase sans aspiration, l'ensemble des vannes sont, par exemple, en configuration fermée.

Alternativement, si lors de la phase d'aspiration, le volume à aspirer du dernier fluide en cours d'aspiration n'est pas atteint, alors la vanne correspondante reste en configuration ouverte pendant la phase sans aspiration, et sera fermée lors d'une prochaine phase d'aspiration lorsque le volume à aspirer est atteint.

Ainsi, le procédé de rinçage comprend alternativement une étape d'aspiration et étape sans aspiration.

Lors de l'étape sans aspiration, dans l'exemple décrit précédemment, la pompe doseuse expulse une portion complémentaire de la portion expulsée pendant l'aspiration, ici la moitié de la cylindrée de la pompe doseuse, de fluide au niveau de la sortie 28.

De même que précédemment, ledit fluide comprend du solvant et du gaz, ici de l'air, par exemple comprimé.

Le fluide est, par exemple, pré-mélangé par le déplacement de la tête de piston, dans l'exemple de pompe décrit en regard de la figure 3.

Le fluide est, par exemple, mélangé par le mélangeur 45 ; 145 sur la ligne de sortie 44 ; 144.

Une émulsion est créée.

L'émulsion s'écoule le long de la ligne de sortie 44 ; 144 jusqu'à l'applicateur 13 ; 113.

L'applicateur 13 ; 113 est ainsi également rincé par l'émulsion.

Ce procédé de rinçage est mis en oeuvre directement par le dispositif électronique 24 ; 124 du dispositif d'application 12 ; 112.

Plus particulièrement, le module de commande 48 ; 148 met en oeuvre l'étape d'aspiration par contrôle successif de la vanne de gaz 40 ; 140 et de la vanne de solvant 42 ; 142.

Avantageusement, le module de suivi 50 ; 150 permet un suivi de la quantité (en volume et/ou en temps) de solvant et de gaz aspiré par la pompe doseuse 14 ; 114.

Le rinçage peut donc être réalisé sans intervention humaine.

En outre, en alternant le solvant et le gaz dans le volume en entrée de la pompe doseuse, cela permet de créer une émulsion qui est utilisée pour rincer le dispositif d'application. Cela permet de diminuer la quantité de solvant utilisé pour le rinçage.

## Revendications

1. Procédé de rinçage d'un dispositif d'application (12 ; 112) de produit de revêtement comprenant un dispositif de dosage (10 ; 110) et un applicateur (13 ; 113) de produit de revêtement, le dispositif de dosage (10 ; 110) comprenant une pompe doseuse (14 ; 114) présentant une entrée (26 ; 126) et une sortie (28 ; 128), l'entrée (26 ; 126) étant reliée à une voie d'alimentation en gaz (20 ; 120) et une voie d'alimentation en solvant (22 ; 122), la sortie (28 ; 128) étant reliée à l'applicateur (13 ; 113) de produit de revêtement, la voie d'alimentation en gaz (20 ; 120) étant pourvue d'une vanne de gaz (40 ; 140), la voie d'alimentation en solvant (22 ; 122) étant pourvue d'une vanne de solvant (42 ; 142), chacune des vannes de gaz et de solvant (40, 42 ; 140, 142) présentant au moins une configuration fermée, dans laquelle la vanne (40, 42 ; 140, 142) empêche le passage respectivement de gaz ou de solvant vers l'entrée, et au moins une configuration ouverte, dans laquelle la vanne (40, 42 ; 140, 142) permet le passage respectivement de gaz ou de solvant vers l'entrée, le procédé comprenant au moins une étape d'aspiration par la pompe doseuse (14 ; 114) d'un volume lors d'au moins une phase d'aspiration de la pompe doseuse (14 ; 114), la vanne de gaz (40 ; 140) et la vanne de solvant (42 ; 142) étant alternativement dans la configuration ouverte pendant l'au moins une phase d'aspiration, de sorte que le volume aspiré lors de l'au moins une phase d'aspiration comprend alternativement du gaz et du solvant,
le procédé comprenant une détection du volume aspiré pendant l'aspiration par la pompe doseuse (14 ; 114), pendant l'aspiration, lorsque du solvant est aspiré par la pompe doseuse (14 ; 114), lorsque la quantité du solvant aspiré surveillée par un module de suivi (50 ; 150) atteint la quantité souhaitée, alors un module de commande (48 ; 148) envoie une instruction à la vanne de solvant de passer en configuration fermée, puis envoie une instruction à la vanne de gaz de passer en configuration ouverte, puis, lorsque la quantité de gaz aspiré surveillée par le module de suivi (50 ; 150) atteint la quantité souhaitée, alors le module de commande (48 ; 148) envoie une instruction à la vanne de gaz de passer en configuration fermée, puis envoie une instruction à la vanne de solvant de passer en configuration ouverte, et ainsi de suite.

2. Procédé de rinçage selon la revendication 1, dans lequel l'au moins une phase d'aspiration comprend, dans cet ordre, les étapes suivantes : ouverture d'une première vanne parmi la vanne de gaz (40 ; 140) et la vanne de solvant (42 ; 142), aspiration de gaz ou de solvant par la pompe doseuse (14 ; 114) pour un premier volume, fermeture de la première vanne, ouverture d'une deuxième vanne parmi la vanne de gaz (40 ; 140) et la vanne de solvant (42 ; 142), la deuxième vanne étant différente de la première vanne, aspiration de gaz ou de solvant par la pompe doseuse (14 ; 114) pour un deuxième volume , et fermeture de la deuxième vanne, lesdites étapes précédentes étant répétées pendant toute l'au moins une phase d'aspiration.

3. Procédé de rinçage selon la revendication 1 ou 2, dans lequel l'aspiration comprend un cycle d'aspiration comprenant une aspiration de gaz et une aspiration de solvant par la pompe doseuse (14 ; 114), ledit cycle d'aspiration étant réitéré pendant toute la phase d'aspiration.

4. Procédé de rinçage selon l'une quelconque des revendications 1 à 3, dans lequel le volume aspiré pendant l'aspiration par la pompe doseuse (14 ; 114) est détecté par un capteur (46 ; 146) de volume aspiré ou un capteur de déplacement de la pompe doseuse (14 ; 114).

5. Procédé de rinçage selon l'une quelconque des revendications 1 à 4, dans lequel le dispositif de dosage comprend en outre au moins deux voies d'alimentation (16, 18 ; 116, 118) en produit composant respectif.

6. Procédé de rinçage selon l'une quelconque des revendications 1 à 5, dans lequel la pompe doseuse (14 ; 114) est une pompe à piston.

7. Procédé de rinçage selon l'une quelconque des revendications 1 à 6, dans lequel la voie d'alimentation en gaz (120) est pourvue d'un compresseur (164), le compresseur (164) étant adapté pour comprimer le gaz vers l'entrée (126) de la pompe doseuse (114) en amont de la vanne de gaz (140), la voie d'alimentation en solvant (122) étant pourvue d'une pompe secondaire en solvant (166), la pompe secondaire en solvant (166) étant adaptée pour pomper le solvant vers l'entrée (126) de la pompe doseuse (114), la pompe secondaire en solvant (166) étant agencée en amont de la vanne de solvant (142).

8. Procédé de rinçage selon l'une quelconque des revendications 1 à 7, dans lequel le dispositif de dosage (12 ; 112) comprend un mélangeur (45 ; 145) en aval de la sortie (28 ; 128) de la pompe doseuse (14 ; 114), plus particulièrement agencé adjacent à la sortie de la pompe doseuse (14 ; 114).

9. Dispositif d'application (10 ; 110) de produit de revêtement comprenant un dispositif de dosage (10 ; 110) et un applicateur (13 ; 113) de produit de revêtement, le dispositif de dosage (10 ; 110) comprenant une pompe doseuse (14 ; 114), une voie d'alimentation en gaz (20 ; 120) et une voie d'alimentation en solvant (22 ; 122), et un module de commande (48 ; 148), la pompe doseuse (14 ; 114) présentant une entrée (26 ; 126) et une sortie (28 ; 128), l'entrée (26 ; 126) étant reliée à la voie d'alimentation en gaz (20 ; 120) et la voie d'alimentation en solvant (22 ; 122), la sortie (28 ; 128) étant reliée à l'applicateur (13 ; 113) de produit de revêtement, la voie d'alimentation en gaz (20 ; 120) étant pourvue d'une vanne de gaz (40 ; 140), la voie d'alimentation en solvant (22 ; 122) étant pourvue d'une vanne de solvant (42 ; 142), chacune des vannes de gaz et de solvant (40, 42 ; 140, 142) présentant au moins une configuration fermée, dans laquelle la vanne (40, 42 ; 140, 142) empêche le passage respectivement de gaz ou de solvant vers l'entrée, et au moins une configuration ouverte, dans laquelle la vanne (40, 42 ; 140, 142) permet le passage respectivement de gaz ou de solvant vers l'entrée, le module de commande (48 ; 148) étant apte à contrôler la vanne de gaz (40 ; 140) et la vanne de solvant (42 ; 142), la quantité de solvant aspiré et la quantité de gaz aspiré étant surveillée par un module de suivi (50 ; 150), le module de commande (48 ; 148) et le module de suivi (50 ; 150) étant configuré pour mettre en oeuvre une aspiration selon l'au moins une étape d'aspiration du procédé selon l'une quelconque des revendications 1 à 8.
